# EUROPEAN PATENT SPECIFICATION

(11) **EP 4 367 029 B1**
(45) Date of publication and mention of the grant of the patent: **14.05.2025**
(21) Application number: 22747121.6
(22) Date of filing: 04.07.2022
(51) Int. Cl.: B65B 51/14

(54) **SYSTEM FOR PACKING TISSUE PAPER PRODUCTS IN WRAPPING SHEETS**
EIN SYSTEM ZUM VERPACKEN VON PAPIER-PRODUKTEN
SYSTÈME D'EMBALLAGE DE PRODUITS EN PAPIER

(30) Priority: 09.07.2021 IT 202100018176
(43) Date of publication of application: 15.05.2024
(73) Proprietor: Valmet Tissue Converting S.p.A., 55100 Lucca (IT)
(72) Inventor: FRASNETTI, Luca, 55015 Montecarlo (LU) (IT)
(74) Representative: Mannucci, Michele
(86) International application number: PCT/IB2022/056173
(87) International publication number: WO 2023/281378

(56) References cited:
- WO-A1-2018/234399
- WO-A2-2016/135664
- CA-A1- 2 976 316
- US-A- 6 067 780

## Description

### TECHNICAL FIELD

The present invention concerns improvements to machines and systems for packing groups of tissue paper products, especially, although without limitation, rolls of tissue paper.

### BACKGROUND ART

To be distributed and sold, tissue paper products, typically toilet rolls, kitchen towels and the like, are wrapped in wrapping sheets. The wrapping sheets are made of plastic, for example polymeric material, bioplastic, paper and the like.

The groups of products may include a single product or more products arranged according to geometrical patterns, for example in one or more layers, each of which comprises one or more rows of products.

The pack is formed by wrapping the group of products in a wrapping sheet. Examples of packing machines are disclosed in EP2766266, EP3625131, EP2114772.

US6067780 discloses a machine for packing packs or groups of tissue paper rolls. In the specification thereof, it is generically indicated that the machine may comprise generic means for detecting the size of the group of rolls.

The packing machines are highly productive and highly automatized machines. They are adapted to handle groups of products of different sizes and geometries. They shall be controlled in order to ensure high quality packs.

Quality may be affected by folding, welding and printing defects in the wrapping sheet, by wrong positioning of the wrapping sheet relative to the group of products to be packed, and the like. Defects may also result from a wrong mutual position of the products, a poor tension of the wrapping sheet which leads the products not to be tightly compacted in the wrapping sheet, or even from faults in cutting or perforating the wrapping sheet along pre-breakage lines. Lastly, defects may also result from wrong or inaccurately folding the wrapping sheet around the group of products during the packing cycle.

It would be therefore useful to have available a packing machine capable of detecting any defect in the pack and, if necessary, to intervene sending an alarm or adjusting the operation parameters to remove the cause of the defect.

### SUMMARY

For the purpose mentioned above, a system is disclosed herein, comprising a packing machine for wrapping tissue paper products in a wrapping sheet, the machine including a positioning device adapted to position a wrapping sheet along an insertion path where the group of rolls is inserted toward a feeding and packing path. The machine further comprises a feeder adapted to insert a group of tissue paper products in the insertion path toward the feeding and packing path. A conveyor is adapted to move the tissue paper products along the feeding and packing path through a folding unit adapted to wrap the wrapping sheet around the group of tissue paper products. A closing system, adapted to close the wrapping sheet around the tissue paper products and to form a pack of tissue paper products, is arranged along the feeding and packing path downstream of the folding unit. Characteristically, the packing system comprises at least one first vision system for acquiring images of at least one portion of the pack of tissue paper products wrapped in the wrapping sheet. The vision system comprises at least one video camera. The vision system may be arranged inside or outside the packing machine, or partly inside and partly outside the packing machine.

Contrary to the prior art packing machines that simply generically detect the size of a pack of rolls in one or the other direction, the machine according to the invention can perform a quality control of the pack at the end of, or during, the packing cycle, thanks to the images acquired by the camera(s) of the vision system.

Here below, reference will be made in general to a "packing machine", wherein the term also includes the vision system, independently of whether this system is inside, outside, or partly inside and partly outside, the packing machine in the strict sense of the word.

The images acquired by the vision system may be used to adjust, automatically, semi-automatically or manually (for instance through alarms sent to an operator), one or more units of the packing machine, in order to correct the operation of the packing machine and to reduce or to eliminate any defect detected on the produced packs.

Further advantageous features and embodiments of the packing machine according to the present invention are defined in the attached claims, which form an integral part of the present description, and will be described below with reference to the drawing, showing a non-limiting exemplary embodiment of the invention.

### BRIEF DESCRIPTION OF THE DRAWING

The invention will be better understood by following the description below and the attached drawing, showing non-limiting embodiments of the invention. More specifically, in the drawing:
Fig. 1 is a front view according to the line I-I of Fig. 2 of a first embodiment of the packing machine;
Fig. 2 is a simplified view according to the line II-II of Fig. 1;
Figs. 3 to 6 show a sequence of the first step of packing a group of tissue paper rolls by the machine of Figs. 1 and 2;
Figs. 7A-7G show a sequence illustrating the operations for forming a pack with the machine of Figs. 1 and 2; and
Fig. 8 is a plan view, according to the line VIII-VIII of Fig. 1, of the welding area of the packing machine.

### DETAILED DESCRIPTION

As mentioned above, in the detailed description below reference will be made to a packing machine, this term indicating the packing machine in the strict sense, as well as the vision system(s) that can be either integrated in the packing machine, i.e., arranged inside the packing machine, or arranged outside the packing machine, or partly inside and partly outside the packing machine.

The packing machine 1 comprises a feeder 2 to insert, according to an arrow Fi, groups G of tissue paper products R in an insertion path 4 toward a feeding and packing path 10, along which the tissue paper products R move forward according to the arrow fG and are wrapped in a wrapping sheet F as described in greater detail below.

In the illustrated example, the products R are tissue paper rolls, for example toilet rolls.

The feeder 2 comprises an elevator 3 provided with a movement according to a substantially vertical direction indicated by the double arrow f3. The reference number 3A indicates an actuator, whilst the numbers 3B and 3C indicate members for transferring and converting the reciprocating rotary motion from the actuator 3B (for example an electric motor) to the elevator 3.

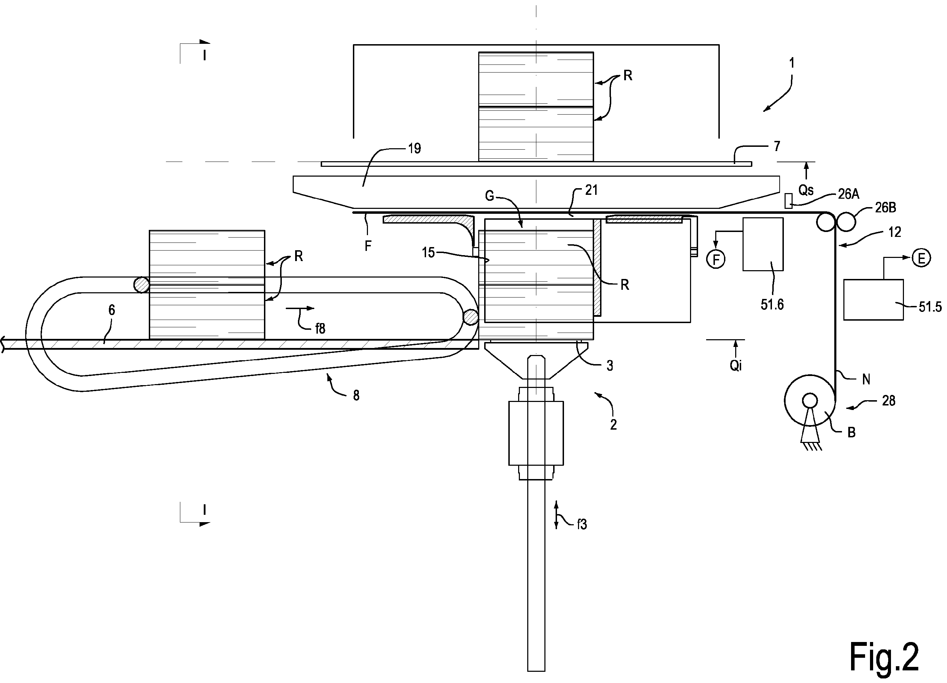

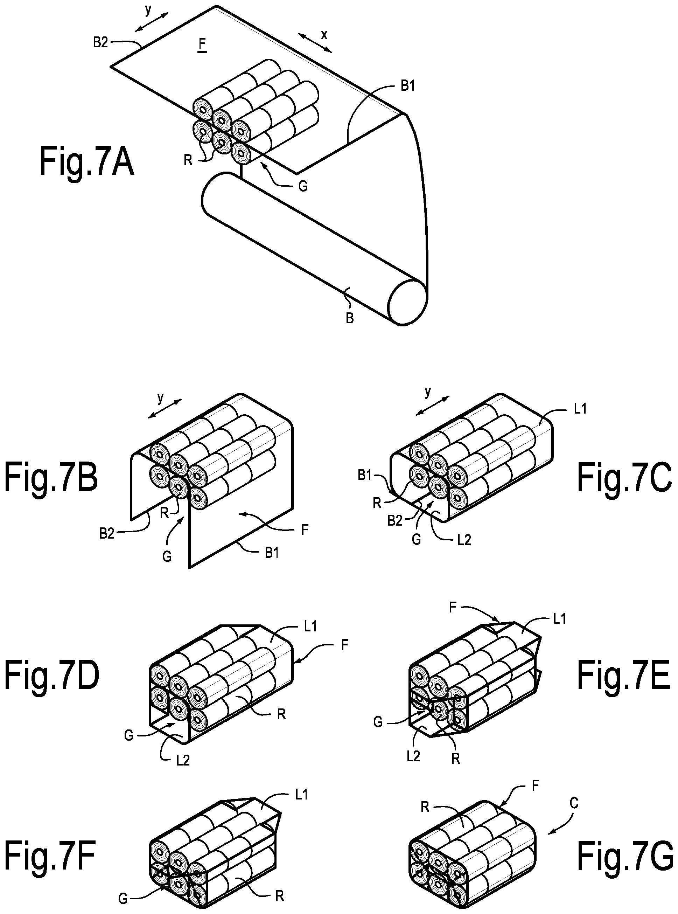

The elevator 3 raises groups G of tissue paper products R from a lower level Qi, where the products are fed by a feeding unit 8 (Fig. 2), to a higher level Qs, where a sliding surface 7 is provided, along which the groups G of products R move forward to complete the packing cycle and to obtain the finished pack according to the packing process illustrated in detail in the sequence of Figs. 7A-7G.

The feeding unit 8 can put a variable number of layers (two, in the example of Figs. 7A-7G) of products R on the elevator 3, inserting them with a movement according to the arrow f8 (Fig. 2) and making them slide on a plane 6. Once the groups G of products R have achieved the higher level Qs, they move according to the arrow fG along the sliding surface 7 through a folding unit 9 and a closing system 14 that comprises, in the illustrated example, a welding unit 11. The closing system 14 closes the wrapping sheet F around the group G of products R.

The groups G of products R move forward according to the arrow fG through a conveyor 13. In the illustrated embodiment, the conveyor 13 comprises flexible members 13.1, to which teeth 13.2 are fastened. The teeth 13.2 form spaces V where the groups G of products R are received and move forward. The flexible members 13.1 are driven around wheels 13.3 that are suitably motorized to move the flexible members 13.1, and therefore the teeth 13.2, along a closed path. The active branch of the closed path is the lower branch, in correspondence of which the groups G of products R are inserted in the spaces V and moved forward according to the arrow fG.

The conveyor 13 may be designed, for example, as described in EP1655230, EP3625132.

The conveyor 13 may be also designed differently. For example, the flexible members may be replaced by guides defining a closed path similar to the path of the flexible members 13.1, along which carriages carrying the teeth 13.2 move. The movement can be controlled by linear motors that form, or are embodied in, the guides. An example of this kind of conveyor 13 is disclosed in IT1426528.

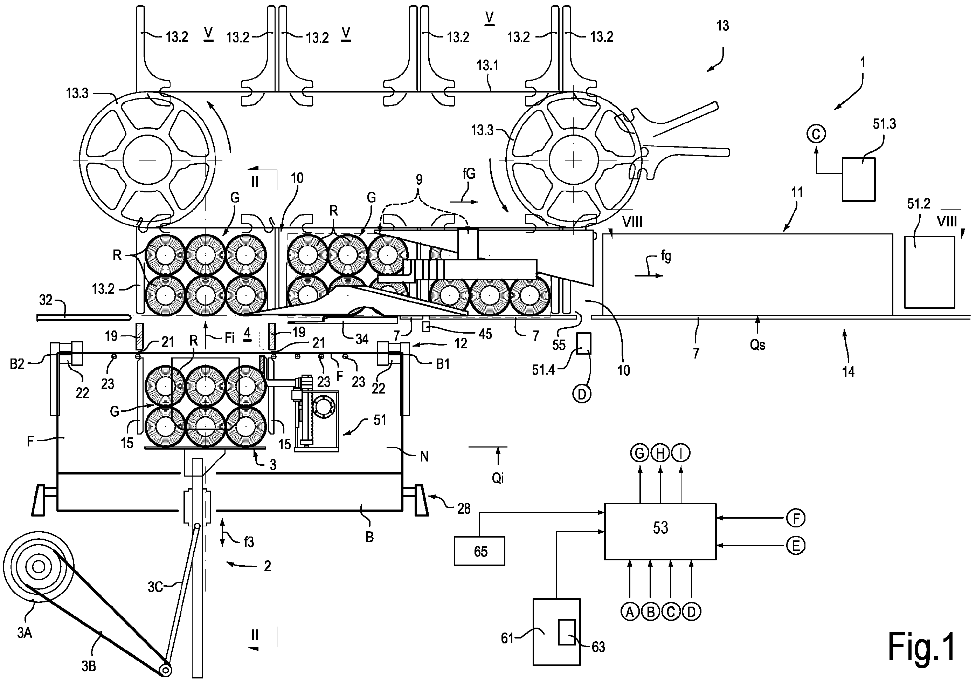

As shown in Figs. 1 and 2, above the level Qi guiding walls 19 are provided, whose lower edges form, together with the upper edges of two side walls 15, two slots 21 for inserting and positioning a wrapping sheet F, made for example of polymeric material, bioplastic, paper or other material.

The wrapping sheet F is fed and positioned along the insertion path by a positioning device 12.

In some embodiments, the wrapping sheet F is obtained by cutting the required length of a web material N unwound from a reel B arranged in an unwinder 28 that is part of the positioning device 12. A cutting member, schematically shown at 26A (Fig. 2), is provided to cut the continuous web material N unwound from the reel B. The wrapping sheet F may have one or more tear lines or pre-breakage lines, for example perforation lines. These can be made by a perforating device 26B provided along the path of the web material N (Fig. 2).

The web material N unwound from the reel B moves forward through the slots 21. In advantageous embodiments, the web material N is drawn by belts or other feeding members 22 that are part of the positioning device 12 and engage longitudinal edges B1, B2 of the web material N, unwinding it on a substantially horizontal geometrical plane passing through the two slots 21 and intersecting the insertion path 4.

In further embodiments, instead of being drawn the reel B is unwound by putting into rotation the axis thereof through a motor, or, as an alternative, by imparting the rotary motion through belts co-acting with the outer surface of the reel B. In this case, the web material N is not tensioned, but it is made move forward without tensioning it, for example by the belts 22.

To keep the wrapping sheet F in an approximately flat arrangement, the positioning device 12 comprises rest elements 23, for example in the form of bars extending parallel to the longitudinal edges B1, B2 of the flat tensioned wrapping sheet F that extends through the slots 21.

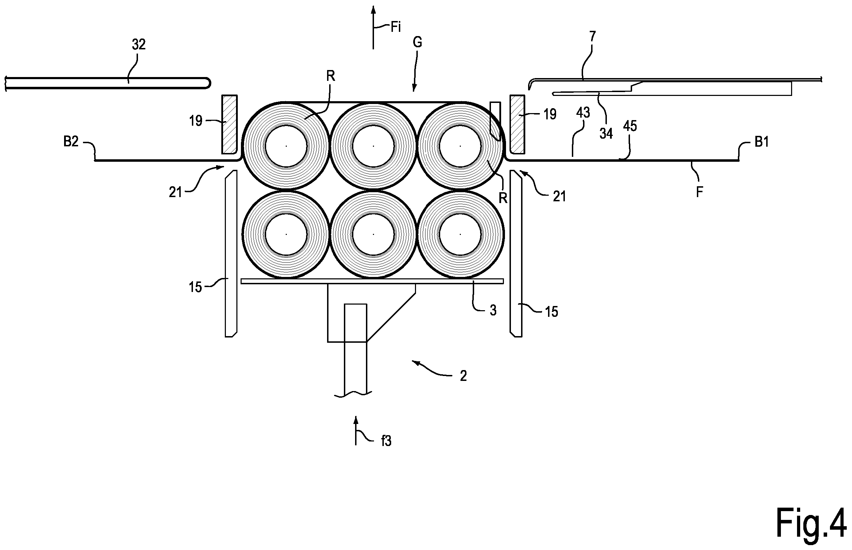

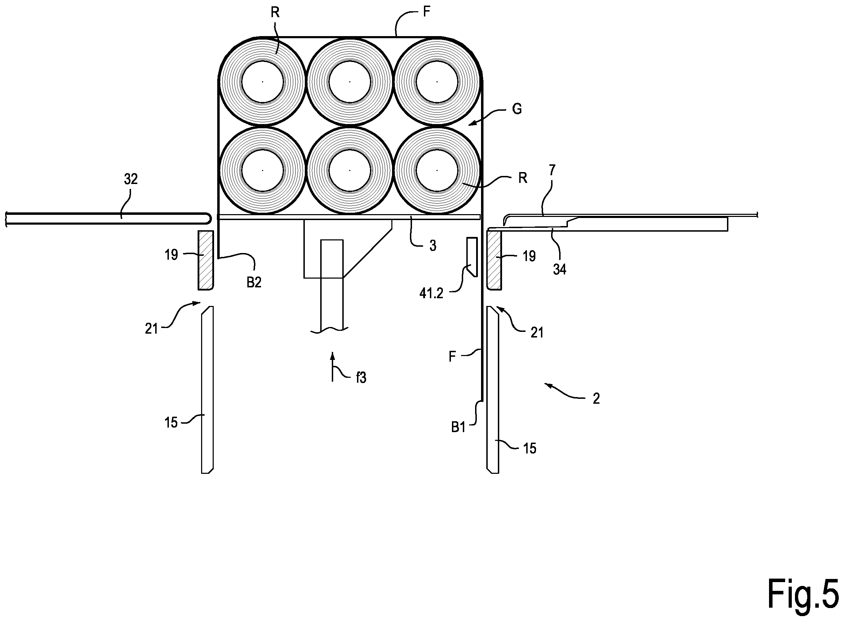

When a group G of products R has been put on the elevator 3, this latter lifts (arrow f3) until to bring the group G of products R to the higher level Qs, where the sliding surface 7 of the feeding and packing path 10 is provided. Each group G of products R is inserted in this way in one of the spaces V defined by the teeth 13.2 of the conveyor 13. During the upward movement, the group G of products R is partially wrapped by the wrapping sheet F as shown in Figs. 4, 5 and in the sequence of Figs. 7A, 7B.

Once the group G of products R has been inserted in the respective space V of the conveyor 13, it moves forward according to the arrow fG through the folding unit 9 and the welding unit 11. Passing through the guiding walls 19, the group G of products R engages the sheet F and forces it to be wrapped around two side surfaces and the upper surface of the group G of products R, taking the position shown in Fig. 7B.

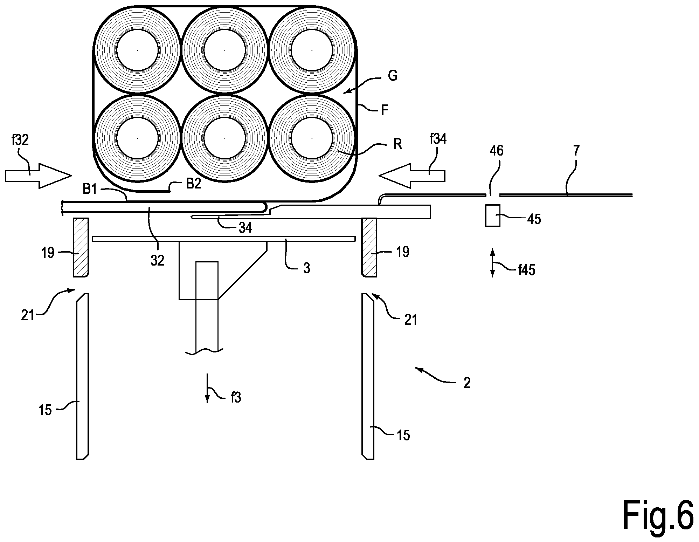

Two lower folding units 32, 34 are provided approximately at the same level of the sliding surface 7, which are part of the folding unit and move horizontally toward each other (arrows f32, f34, Fig. 6) to fold the sheet F under the group G of products R and to overlap the edges B1, B2, whilst the elevator 3 returns downward to the lower level Qi.

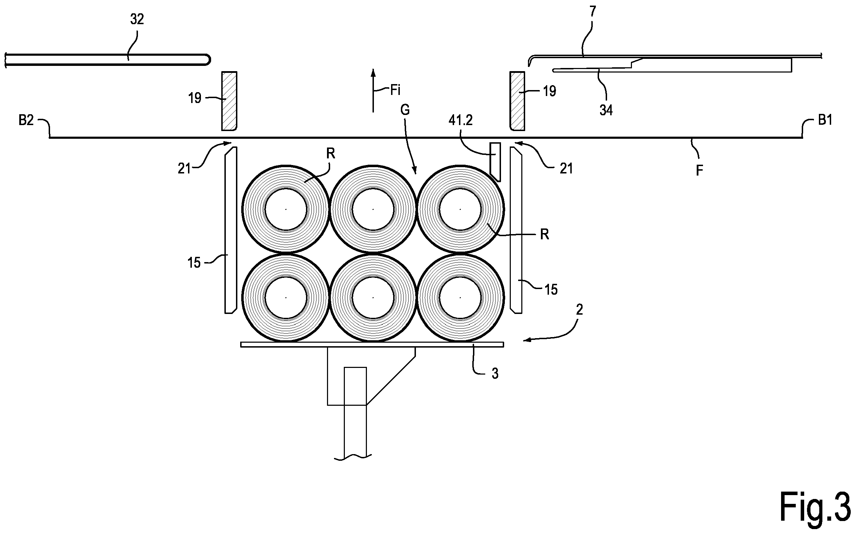

This sequence is illustrated in greater detail in Figs. 3, 4, 5 and 6. More in particular, in Fig. 3 the group G of products R is at the lower level Qi. In Fig. 4 the group G of products R enters in contact with the wrapping sheet F, and the sheet F starts being wrapped around the upper surface and the side surfaces of the group G of products R. In Fig. 5 the group G of products R is at the upper level Qs and in Fig. 6 the edges B1 and B2 have been overlapped to completely wrap the lower surface of the group G of products R; see also Fig. 7C.

The elevator 3 moves downward, toward the lower level Qi, to take a further group G of products R to be packed.

At this stage, the two sides surfaces of the group G of products R are free and the flaps L1, L2 (Figs. 7A-7G) of the wrapping sheet F project from the group G of products R approximately orthogonally to the opposite side surfaces that are still free.

Moving forward along the feeding and packing path 10, the group G of products R passes through side folding members that fold the side flaps L1, L2 of the wrapping sheet F against the side surfaces of the group G of products R, as shown in the sequence of Figs. 7D-7G. The side folding members may be designed as disclosed in EP1228966, for instance.

When exiting the folding members, the groups G of products R, wrapped in the sheet F, are transferred from the conveyor 13 to the closing system 14. As mentioned above, in the illustrated embodiment the closing system 14 comprises a welding system 11 that heats the wrapping sheet F up to a temperature suitable for partially melting it. Thanks to the subsequent cooling, the folded flaps of the wrapping sheet F are bonded together on the side surfaces of the group G of products R, finally stabilizing the wrapping sheet F around the pack of products R that has been obtained.

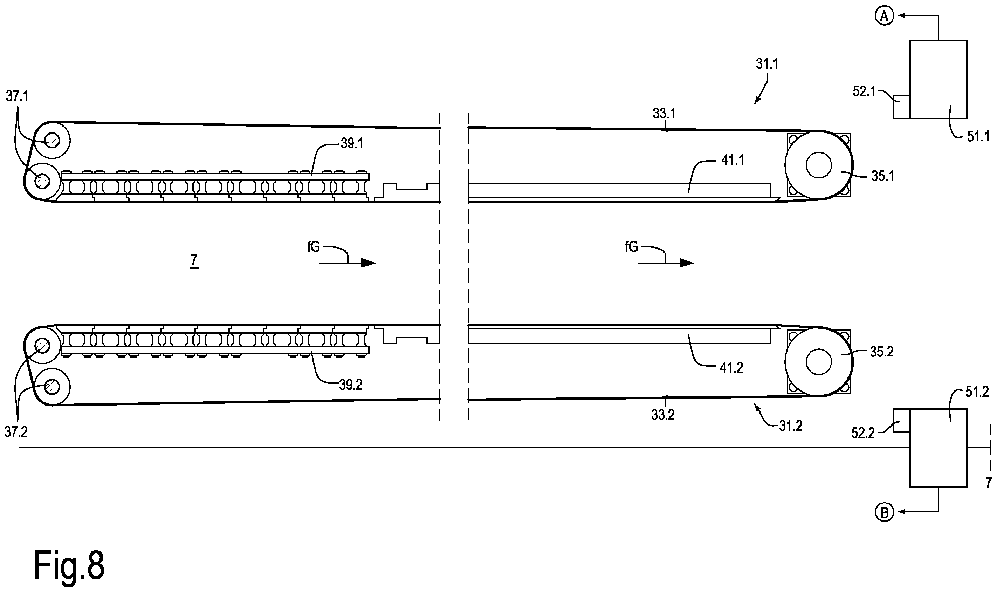

In the illustrated embodiment, the welding unit 11 includes (see in particular Fig. 8) a first side closing device 31.1 and a second side closing device 31.2. The first side closing device 31.1 comprises a first continuous flexible member 33.1 driven around a motorized roller 35.1 and around one or more idle rollers 37.1. The second side closing device 31.2 comprises a second continuous flexible member 33.2 driven around a first motorized roller 35.2 and around one or more idle rollers 37.2. A heating member 39.1, 39.2 is provided in the path formed by each of the two continuous flexible members 33.1 and 33.2, the heating member extending for a portion of the longitudinal extension (in the direction of the feeding and packing path 10) of the continuous flexible members 33.1, 33.2. An anvil plate 41.1, 41.2, extends downstream of the respective heating member 39.1, 39.2, for the purposes described below.

Two opposite active branches of the continuous flexible members 33.1, 33.2 are parallel and so spaced from each other as to receive the packs formed by the groups G of products R wrapped in the wrapping sheets F, and to draw them forward (arrow fG) toward the exit of the packing machine 1. The distance between the active branches of the continuous flexible members 33.1, 33.2 is adjustable according to the transverse size of the groups G of products R.

The continuous flexible members 33.1, 33.2 move the groups G of products R forward along the feeding and packing path 10 toward the exit and, at the same time, allow transferring heat from the heating members 39.1, 39.2, to heat and weld the flaps L1, L2 of a wrapping sheet F folded and put over the side surfaces of each group G of products R. The path downstream of the heating members 39.1, 39.2 between the anvil plates 41.1, 41.2 allows cooling the welded surfaces, thus stabilizing the wrapping sheet F around the groups G of products R. In a modified embodiment, the heating members 39.1, 39.2 coincide with the plates 41.1, 41.2, so as to heat the flaps L1, L2 and, at the same time, to have the necessary pressure for joining them together by welding.

In addition to welding the flaps L1, L2 of the wrapping sheet F folded on the side surfaces of the group G of products R, the packing machine 1 also welds the edges B1, B2 of the sheet F that are overlapped due to the movement of the lower folding units 32, 34. To this end, a transverse closing device 45 is provided, comprising a welding bar movable according to the double arrow f45 (Fig. 6) toward the feeding and packing path 10. The sliding surface 7 has a transverse opening 46 to allow the passage of the welding bar of the transverse closing device 45 toward the feeding and packing path 10. In this way, the welding bar of the transverse closing device 45 heats the wrapping sheet F along a transverse welding line in the area where the edges B1 and B2 overlap each other.

In order to check the quality of the packs prepared by the packing machine 1, one or more vision systems are provided, comprising respective video cameras. In the illustrated embodiment, a first vision system is provided for acquiring images of the pack being formed, i.e., of the group G of products R wrapped in the wrapping sheet F at one or more points of the feeding and packing path 10. In the illustrated embodiment, a second vision system is also provided, acquiring images of the wrapping sheet F and/or of the web material N before it is wrapped around the group G of products R.

In some embodiments, the first vision system comprises a first video camera 51.1 and a second video camera 51.2 that are opposite to each other and arranged at the sides of the feeding and packing path 10 downstream of the closing system 14, see Figs. 1 and 8. The two cameras 51.1, 51.2 are connected to a central control unit, schematically indicated with reference number 53 in Fig. 1. The letters A and B schematically indicate the connections between the cameras 51.1, 51.2 and the central control unit 53.

The first vision system may also comprise a third video camera 51.3, adapted to frame from the top the pack comprised of the group G of products R and the wrapping sheet F. In the scheme of Fig. 1 the camera 51.3 is provided above the feeding and packing path 10 in the area of the closing system 14; however, in further embodiments the camera 51.3 is arranged furthest downstream, for example in the area of the cameras 5.1, 51.2, or downstream these cameras along the feeding and packing path 10.

The third camera 51.3 is connected to the central control unit 53 at C.

The first vision system may also comprise a fourth video camera 51.4 so arranged as to acquire images of the lower surface of the pack comprised of the group G of products R and the wrapping sheet F. The camera 51.4 is connected to the central control unit 53 at D. In the illustrated embodiment, the camera is provided below an opening 55 (Fig. 1) of the sliding surface 7. The dimension of the opening 55 in the direction of the feeding and packing path 10 may be reduced, in order to prevent the groups G of products R and the wrapping sheet F from jamming in the opening 55. In other embodiments, the opening has larger size and is closed by a transparent panel. The choice also depends on the type of images to be acquired. For example, the transparent panel should be omitted if thermographic images shall be acquired, to measure the temperature of the area where the edges B1, B2 of the wrapping sheet F are welded. If the opening 55 has reduced dimensions, the camera 51.4 is, for example, a linear camera.

Systems for measuring the temperature of the sheet F wrapped around the group G of products R can be associated to one or more cameras 51.1, 51.2, 51.3, 51.4. The temperature is measured by a temperature sensor or by the same camera, if it is capable of acquiring infrared images and to measure the temperature of the wrapping sheet F through these images. The temperature is preferably measured on the surfaces of the pack where welding is performed, i.e., on the surfaces framed by the cameras 51.1, 51.2 and 51.4.

A second vision system may comprise one or more cameras adapted to acquire images of the sheet F before it is wrapped around the group G of products R. In the illustrated embodiment, a fifth camera 51.5 and a sixth camera 51.6 are provided and schematically indicated in Fig. 2. Both cameras may be provided, or only one of them. The camera(s) 51.5 and 51.6 are connected to the central control unit 53 at E and F.

The central control unit 53 is provided with, or connected to, a memory 61, where a database 63 is stored, containing images of packs prepared by the packing machine 1 and, in general, images necessary to the comparison with the images acquired by the cameras 51.1, 51.2, 51.3, 51.4, 51.5, 51.6. The images stored in the database 63 can be reference images, for example high quality images, devoid of defects, of packs, and/or of the web material N and/or of the wrapping sheet F. The central control unit 53 is programmed to compare images acquired by the various cameras with the images of the database 63. The images of the database 63 can be classified based on various parameters of the wrapping sheet and/or of the groups G of products R. The central control unit 53 receives information on the type of pack to be produced, for example through an interface 65. Based on this information, the central control unit uses the right reference images retrieved from the database 63. In some embodiments, the central control unit 53 controls various actuators, devices and actuating members of the packing machine 1, to produce the desired packs and to correct any defect detected by comparing the images acquired by the cameras and those stored in the database 63.

For example, the central control unit may control one or more of the following members, parts and parameters of the packing machine: the systems for unwinding and positioning the web material N; the feeding unit 8; the cutting member 26A; the perforating device 26B; the actuator 3A of the elevator 3; the conveyor 13; the members controlling the lower folding units 32, 34; the movement and the temperature of the welding bar of the transverse closing device 45; the movement of the continuous flexible members 33.1, 33.2 and the temperature of the heating members 39.1, 39.2 of the closing system 14. In Fig. 1, G, H and I indicate generic control connections between the central control unit 53 and the single elements of the packing machine 1 mentioned above.

A further function of the central control unit 53 can be to modulate, change, or correct the operation of one or more of the elements mentioned above, to which it is connected, according to the parameters of the pack to be produced. For example, it is possible to adjust the upward stroke of the elevator 3 based on the number of layers constituting the group G of products R to pack. The frequency of the upward and downward movement of the elevator 3 may be adjusted based on the production speed of the packing machine 1, that can be modulated for the purposes described below.

Similarly, the central control unit may adjust the members or elements or parameters of the packing machine 1 correctly to pack the groups G of products R based on the size thereof, and/or on other parameters, for example the firmness of the tissue paper rolls if the products are toilet rolls, kitchen towels or the like, the type of wrapping sheet, or other parameters.

For example, the central control unit 53 may modulate the temperature of the welding bar of the transverse closing device 45 and/or the temperature of the heating members 39.1, 39.2 according to both the production speed and the type of web material N forming the wrapping sheets F.

The cameras of the vision systems may be used to view the welding areas and to check the correct welding. For example, the camera 51.4 may check the correct welding line made by the welding bar of the transverse closing device 45. A temperature sensor 54 may be provided, associated with the camera 51.4 to detect the temperature of the wrapping sheet F in the transverse welding area. Alternatively, the temperature may be obtained by analyzing the image taken by the camera 51.4, that, to this end, may be an infrared camera. In some embodiments, the camera 51.4 is a thermographic camera. In further embodiments, the camera 51.4 comprises two video cameras, one for visible wavelengths and the other for infrared, to take an image of the pack formed by the sheet F and the group G of products R wrapped in the sheet F.

In general, the detected data, in the form of images and/or temperature data, are used to verify whether the transverse welding has been performed correctly. In some embodiments, the image taken by the camera 51.4 is compared with one or more sample images stored in the database 63, showing the correct transverse welding. The sample image(s) can be selected based on pack parameters, for example the size of the group G of products R, the type of wrapping sheet F etcetera.

Similarly, the images taken by the cameras 51.1, 51.2 are used to verify the correct welding of the side flaps L1, L2 of the wrapping sheet F. Any one of, or both, the cameras 51.1 and 51.2 can also detect thermographic images. In some embodiments, each of the cameras 51.1, 51.2 comprises a video camera for visible wavelengths and a camera for infrared. Alternatively, or in combination, a temperature sensor 52.1, 52.2 may be associated with one or both cameras 51.1, 51.2.

The images acquired by the cameras 51.1, 51.2 and/or the temperature data acquired by the cameras, or by temperature sensors associated with the cameras, are compared with reference images and/or reference temperature data, stored in the database 63. In this case again, the comparison data (temperature data and/or images) may be selected based on the type of pack to be produced.

Also the upper camera 51.3 may be used to take images that are compared with reference images stored in the database 63 and selected, for example, based on the type of pack to be produced.

Any of the above-mentioned cameras may be used to check the correct welding, the correct folding of the flaps L1, L2, the correct position of the wrapping sheets F relative to the group G of products R, for example when the wrapping sheets F have images, reference marks, codes or other visual elements. In particular, the cameras 51.3 and 51.4 may detect displacements or anomalous inclinations of images printed on the wrapping sheet F and positioned on the upper and lower surfaces of the group G of products R. The cameras 51.1 and 51.2 may detect defects in folding and/or welding the side flaps L1, L2. The camera 51.4 is also capable of identifying defects in the welding made by the welding bar of the transverse closing device 45.

The cameras 51.1, 51.2, 51.3 and 51.4 are also capable of detecting defects such as holes, tears, stains etcetera, in the wrapping sheet F.

The cameras can also check the correct geometry of the pack and therefore the correct arrangement of the products R of each group G, and the correct tension of the wrapping sheet F around each group G of products R. Specifically, the cameras can detect errors in the mutual position of the products R, or a wrong adhesion of the wrapping sheet F to the products R.

Based on what has been detected by the cameras, the central control unit 53 can intervene on the operation of the packing machine 1. For example, if the cameras detect a defect in welding or folding the wrapping sheet F, the production speed (frequency), or the temperature of any closing device (welding bar of the transverse closing device 45 and heating devices 39.1, 39.2) can be changed.

The cameras 51.5 and 51.6 of the second vision system may be used to check the integrity and quality of the web material N before or after being cut into single wrapping sheets F. The cameras may be used, for example, to verify the correct position of prints, reference marks or any other elements printed on the web material N and on the wrapping sheets F. The cameras of the second vision system can also check the presence, quality and position of the perforation line made by the perforating device 26B.

In general, the images acquired by the cameras allow to control the quality of the packs produced by the packing machine 1, if necessary, by comparison with reference images that can be classified and retrieved from the database 63 based on the type of pack to be produced.

If the central control unit is programmed to modify one or more operation parameters of the packing machine, an artificial intelligence algorithm can be provided, allowing the system comprised of the packing machine and the central control unit to modify the operation parameters in order to correct the pack defects that have been detected by the cameras.

The packing machine may also be equipped with a handle-forming unit, configured to apply a handle to the pack. In this case, one or more cameras of the vision systems are used to verify the right application of the handles. An example of handle-forming unit for packing machines of this type is disclosed in EP1535846.

The reference images contained in the database 63 can be stored through an image acquisition system with machine learning algorithms. For example, during a first period of use of the packing machine, or during a test phase before start or during a commissioning or installation phase of the packing machine, an operator makes the image acquisition system acquire images of defect-free packs, indicating them as reference images for the production. The operator can also indicate to the control system the packs that shall be rejected as they have one or more defects.

Furthermore, once the packing machine 1 has been configured, it is possible to associate a quality score to the produced packs, so as to classify a single pack as high-quality pack, i.e., a defect-free pack that substantially does not differ from the reference images, as medium-quality pack, i.e., a pack with minimal defects that is always acceptable, as poor-quality pack, i.e., a pack with defects that is sufficiently acceptable, or as very-poor-quality pack, i.e., a non-acceptable pack. In this way the operator, based on the score given to the packs, can decide to modify the configuration of the packing machine 1 to improve the quality of the produced packs. Alternatively, the control unit, receiving image comparison data and having information on the actuation systems, the motors, the temperature of the welding members, the temperature of the welds and other information from further sensors, can adjust the packing machine 1 to improve the quality of the produced packs.

In this case again, the algorithm for automatic adjustment can be based on neural networks or machine learning algorithms.

For instance, if the pack is poorly firm, and any of the cameras 51.1, 51.2, 51.3 detects therefore wrinkles or folds in the wrapping sheet, it is possible to adjust the packing machine narrowing the spaces V, and/or moving the two walls 15 toward each other, and/or tensioning the wrapping sheet F more tightly, for example moving the belts or feeding members 22 away by the right extent.

If the pack is too firm, and any of, or both, the cameras 51.1 51.2 detects therefore an excessive deformation of the packed products R, it is possible to intervene on the packing machine in the opposite way. If the products R are tissue paper rolls wound around winding cores, the deformation may be detected as a displacement of the external profile of the rolls with respect to a theoretically circular profile, or as a displacement of the profile of the tubular winding core with respect to a theoretically circular profile, both displacements resulting from a lateral pressure.

As a further example, it is possible to adjust automatically the welding temperature of the wrapping sheet F if the cameras 51.1, 51.2, 51.4 detect welding defects, i.e., either a missing or partial or excessive weld, with holes in the pack resulting from a heat-sealable wrapping sheet F that has excessively melt. For adjusting the welding temperature, thermographic cameras and information on the temperature of the welding units can be also used.

For example, the central control unit 53 can control the change in the welding temperature by detecting a corresponding change in the pack quality. In particular, if a defect is detected, resulting from too high (or too low) welding temperature, the central control unit 53 can be configured to trigger a welding temperature decrease (or, respectively, increase) ramp. Moreover, by keeping taking the images of the following packs, and comparing them with the reference images, the central control unit can be programmed to stop the gradual temperature decrease (or, respectively, increase) when the images taken by the cameras show that the desired pack quality has been achieved.

In this way, the best quality of the packs is restored quickly and automatically, if necessary, even without a direct intervention by the operator.

The same can apply to the transverse closing device 45.

As mentioned, too high temperatures can cause breakages or perforations of the wrapping sheet, while too low temperatures can cause defects resulting in the opening of the wrapping sheet or in an only partial welding of the flaps L1, L2 and/or an only partial transverse welding of the edges B1, B2.

Furthermore, through the cameras it is possible to check that the flaps L1, L2 of the wrapping sheet F are folded correctly. If not, it is possible, for example, to decrease the production speed of the packing machine 1, or to check that the wrapping sheet F held by the belts 22 is tensioned correctly, i.e. that the edges B1 and B2 are approximately parallel to each other.

If anomalies in, or a non-optimal quality of, the packs are detected, alarms can be generated for an operator assigned to the machine. The operator can therefore adjust the packing machine 1 appropriately, manually or guided by the central control unit 53. The alarm can be sent to the operator through a human-machine interface that can comprise, or consist of, any means adapted to provide a signal to the operator. The signal may include the indication of the defect or anomaly detected through the acquired images and, preferably, also the indication of adjustments to be made to the operation parameters of one or more functional units of the packing machine 1. In this case, the central control unit 53 essentially communicates, or suggests, to the operator the necessary adjustments, modifications or regulations that should be made to one or more of the operation parameters of the packing machine 1; in the case of an automatic system, the adjustments, modifications or regulations could be carried out directly by the central control unit 53.

For example, a welding defect due to a too high or too low temperature of the welding members can trigger an alarm that, in addition to signaling the welding defect, suggests to the operator to decrease or, respectively, to increase the temperature of the welding members. A folding defect can be signaled to the operator together with the indication to change (to reduce) the production speed. The presence of wrinkles or the like, indicating that a pack is not firm enough, or of conditions indicating that a pack is too compressed can trigger an alarm, which also suggests to the operator to change the functional parameters useful to increase or, respectively, to decrease, the compactness of the pack.

If a fully automatic adjustment system is provided, the central control unit 53 can be provided with artificial intelligence algorithms based, for example, on neural networks, or machine learning algorithms, through which the central control unit 53 learns from the operator which are the right adjustments to make the packing machine 1 produce defect-free packs. Once the adjustment software is fully functional, the packing machine 1 can be adjusted without the intervention of the operator, however ensuring the highest quality of the produced packs. In other words, a learning phase can be provided for the automatic adjustment software, that can take place during the phase of test or installation of the packing machine 1, or even during the normal production. If equal packing machines shall produce equal packs, the adjustment software, already suitable for the correct operation of the packing machine 1, is preloaded, together with the reference images, in the central control unit 53 of the other packing machines, that are thus ready for use without the need for a test or a machine learning phase.

Essentially, according to embodiments, described herein, the packing machine 1 comprises a central control unit 53, connected to one or more video cameras 51.1, 51.2, 51.3, 51.4, 51.5 of each vision system and programmed to detect at least a defect in the pack based on the images taken by each vision system. The central control unit 53 may be so configured as:
to intervene automatically on an operation parameter of the packing machine to correct the operation of the packing machine in order to reduce or to eliminate the defect; or
to signal, through a human-machine interface, any anomaly, suggesting a corrective action.

In some embodiments, the central control unit 53 interfaces with a database 63 to identify and classify defects based on a comparison with stored images, and therefore to suggest changes to, or to change, one or more operation parameters of the packing machine.

Innovative aspects disclosed herein can be embodied also in other types of packing machines. Just by way of example, cameras may be installed on a packing machine of the type disclosed in WO2007/046126.

## Claims

1. A system for packing tissue paper products (R) in a wrapping sheet (F); wherein the packing system includes:
- a packing machine (1) comprising:
a positioning device (12), adapted to position a wrapping sheet (F) along an insertion path (4), through which groups (G) of products (R) to be packed are moved toward a feeding and packing path (10);
a feeder (2) adapted to insert the groups (G) of tissue paper products (R) in the insertion path (4) up to the feeding and packing path (10);
a conveyor (13) adapted to move the tissue paper products (R) along the feeding and packing path (10) through a folding unit (9) arranged along the feeding and packing path; the folding unit (9) being adapted to wrap the wrapping sheet (F) around the group of tissue paper products (R);
a closing system (14) adapted to close the wrapping sheet (F) around the tissue paper products (R) and to form a pack (C) of tissue paper products, the closing system being arranged along the feeding and packing path (10) downstream of the folding unit (9);
- a first vision system for acquiring images of at least one portion of the pack (C) of tissue paper products (R) wrapped in the wrapping sheet (F), the first vision system comprising at least one video camera
- a central control unit (53), connected to the cameras (51.1, 51.2, 51.3, 51.4, 51.5) of each vision system and programmed to detect at least one defect in the pack, based on the images taken by each vision system, and:
➢ to intervene automatically on an operation parameter of the packing machine (1) to adjust the operation of the packing machine (1) so as to reduce or to eliminate the defect; or
➢ to signal, through a human-machine interface, any anomaly, suggesting a corrective action.

2. The packing system of claim 1, wherein the first vision system is arranged along the feeding and packing path (10) downstream of the closing system (14).

3. The packing system of claim 2, wherein the first vision system comprises at least a first camera (51.1) and a second camera (51.2), arranged opposite each other at the sides of the feeding and packing path (10).

4. The packing system of claim 3, wherein the closing system (14) comprises a first side closing device (31.2) and a second side closing device (31.2), arranged opposite each other at the sides of the feeding and packing path (10), and adapted to join a first pair of flaps (L1) of the wrapping sheet (F) on a first side surface of the pack (C) of tissue paper products (R) and a second pair of flaps (L2) of the wrapping sheet (F) on a second side surface of the pack (C) of tissue paper products (R); and wherein the first camera (51.1) and the second camera (51.2) are so arranged as to take images of the first side surface and of the second side surface of the pack (C) of tissue paper products (R) after the first pair of flaps (L1) of the wrapping sheet (F) and the second pair of flaps (L2) of the wrapping sheet (F) have been folded and joined.

5. The packing system of claim 3 or 4, wherein the first vision system further comprises at least one of the following:
a third video camera (51.3) so arranged as to frame the pack (C) from the top;
a fourth video camera (51.4) so arranged as to frame the pack (C) from the bottom.

6. The packing system of claim 5, wherein the fourth camera (51.4) is a line scan camera, arranged at an opening along a lying-and-feeding surface (7) where the packs (C) of tissue paper products (R) lie and move.

7. The packing system of claim 4, 5 or 6, wherein the first side closing device (31.1) and the second side closing device (31.2) comprise heating members (39.1, 39.2) adapted to close the wrapping sheet (F) preferably by welding, and wherein a temperature sensor (52.1, 52.2) is associated with at least one of the first side closing device (31.1) and second side closing device (31.2), and preferably with both the first side closing device (31.1) and the second side closing device (31.2), the temperature sensor (52.1, 52.2) being arranged downstream of the respective side closing device (31.1, 31.2) along the feeding and packing path (10), the temperature sensor (52.1, 52.2) being adapted to detect the temperature of the wrapping sheet (F) in an area where the respective side closing device has acted.

8. The packing system of at least claim 5, wherein the packing machine (1) comprises a transverse closing device (45), adapted to join two overlapped edges (B1, B2) of the wrapping sheet (F) that are substantially orthogonal to the side surfaces of the pack (C) of tissue paper products (R), and wherein the fourth camera (51.4) is arranged downstream of the transverse closing device (45) along the feeding and packing path (10), so as to frame the surface of the pack (C) of tissue paper products (R) where the two overlapped joined edges of the wrapping sheet are arranged.

9. The packing system of claim 8, wherein the side closing device (45) is arranged below the feeding and packing path (10).

10. The packing system of claim 8 or 9, wherein the fourth camera (51.4) is a line scan camera arranged in correspondence of the lying-and-feeding surface (7) where the packs (C) of tissue paper products (R) lie and move, the lying-and-feeding surface (7) extending along the feeding and packing path (10).

11. The packing system of claim 8 or 9 or 10, wherein the transverse closing device (45) is a welding device and wherein a temperature sensor (54) is associated with the transverse closing device (45), the sensor being adapted to detect the temperature of the wrapping sheet (F) in the transverse closing area, downstream of the transverse closing device (45) along the feeding and packing path (10), in an area where the transverse closing device (45) has acted.

12. The packing system of one or more of the previous claims, wherein the positioning device (12) is combined with an unwinder (28) adapted to support a roll (B) of web material (N), from which single wrapping sheets (F) are cut by a cutting member (26A); and wherein a second vision system is combined with at least one of the positioning device (12) and the unwinder (28), to acquire images of the web material (N) before or after the wrapping sheets (F) have been cut and before the wrapping sheet (F) is wrapped around the group of tissue paper products (R).

13. The packing system of claim 12, wherein the second vision system comprises at least one fifth video camera (51.5) arranged either along an unwinding path of the web material (N) from the unwinder (28) up to the positioning device (12) or in the same positioning device (12).

14. The packing system of claim 12 or 13, wherein the packing machine (1) comprises a perforating device (26B) adapted to perforate the web material (N) unwound from the roll (B) to define a pre-breakage line on the wrapping sheet (F).

15. The packing system of one or more of the preceding claims, wherein the central control unit (53) interfaces with a database (63) adapted to contain reference images of the packs (C) of tissue paper products (R); and wherein the central control unit (53) is programmed to compare images acquired by at least one camera with images stored in the database (63).

16. The packing system of claim 15, wherein the central control unit (53) is configured to receive one or more of the following data:
- a production speed of the machine;
- a temperature of the transverse closing device;
- a temperature of the first side closing device;
- a temperature of the second side closing device;
- a tension of the web material;
- a speed of the conveyor;
- a piece of information on the operation of the web material cutting member;
- a piece of information on the operation of the web material perforating device;
- a piece of information on the firmness of the tissue paper products;
- a piece of information on a geometrical arrangement of the tissue paper products forming the group of tissue paper products;
- a piece of information on at least one image printed on the wrapping sheet.

17. The packing system of claim 15 or 16, wherein the central control unit (53) is configured:
to detect a defect in at least one image of the pack (C) acquired by at least one camera based on the comparison between the acquired image and a reference image stored in the database (63); and
in case a defect in the pack (C) is detected, to modify at least one operation parameter of the packing machine (1); or to signal an operator the appropriateness of modifying at least one operation parameter of the packing machine (1).

18. The packing system of one or more of claims 15 to 17, wherein the reference images of the packs (C) of tissue paper products are either stored in advance in the database, or acquired when the production starts, or acquired during production.

19. A method for producing packs (C) of tissue paper products (R) through the packing system of one or more of the previous claims, comprising the following steps:
acquiring, through at least one vision system, images of the packs or of the wrapping sheet, wherein the at least one vision system comprises at least one video camera;
detecting a defect in the pack or in the wrapping sheet through said images acquired by the at least one video camera of said at least one vision system;
suggesting a corrective action or performing a corrective action on at least one operation parameter to correct the detected defect.

20. The method of claim 19, wherein the step of detecting a defect in the pack (C) or in the wrapping sheet (F) comprises the step of comparing an image acquired by the vision system with reference images stored in a database.

## Patentansprüche

1. System zum Verpacken von Tissuepapier-Produkten (R) in ein Einwickelblatt (F), wobei das Verpackungssystem umfasst:
- eine Verpackungsmaschine (1) mit:
eine Positioniervorrichtung (12), eingerichtet, ein Einwickelblatt (F) entlang eines Einführungsweges (4) zu positionieren, durch den Gruppen (G) von zu verpackenden Produkten (R) zu einem Zuführ- und Verpackungsweg (10) bewegt werden;
eine Zuführeinrichtung (2), eingerichtet, die Gruppen (G) von Tissuepapier-Produkten (R) in den Einführungsweg (4) bis zum Zuführ- und Verpackungsweg (10) zu führen;
einen Förderer (13), eingerichtet, die Tissuepapier-Produkte (R) entlang des Zuführ- und Verpackungsweges (10) durch eine Falteinheit (9) zu bewegen, die entlang des Zuführ- und Verpackungsweges angeordnet ist; wobei ist die Falteinheit (9) eingerichtet ist, das Einwickelblatt (F) um die Gruppe von Tissuepapier-Produkten (R) zu wickeln;
ein Verschlusssystem (14), eingerichtet, das Einwickelblatt (F) um die Tissuepapier-Produkte (R) zu schließen und eine Packung (C) von Tissuepapier-Produkten zu bilden, wobei das Verschlusssystem entlang des Zuführ- und Verpackungsweges (10) der Falteinheit (9) nachgelagert angeordnet ist;
- ein erstes Sichtsystem zum Erfassen von Bildern von mindestens einem Teil der Packung (C) von Tissuepapier-Produkten (R), die in dem Einwickelblatt (F) eingewickelt sind, wobei das erste Sichtsystem mindestens einer Videokamera umfasst
- eine zentrale Steuereinheit (53), die mit den Kameras (51.1, 51.2, 51.3, 51.4, 51.5) jedes Sichtsystems verbunden und so programmiert ist, dass sie auf der Grundlage der von jedem Sichtsystem aufgenommenen Bilder mindestens einen Fehler in der Packung erkennt, und:
- um automatisch in einen Betriebsparameter der Verpackungsmaschine (1), einzugreifen, um den Betrieb der Verpackungsmaschine (1) so einzustellen, dass der Fehler verringert oder beseitigt wird, oder
- um über eine Mensch-Maschine-Schnittstelle jede Anomalie zu melden und eine Korrekturmaßnahme vorzuschlagen.

2. Verpackungssystem nach Anspruch 1, wobei das erste Sichtsystem entlang des Zuführ- und Verpackungsweges (10) dem Verschlusssystem nachgelagert angeordnet.

3. Verpackungssystem nach Anspruch 2, wobei das erste Sichtsystem mindestens eine erste Kamera (51.1) und eine zweite Kamera (51.2) umfasst, die einander gegenüberliegend an den Seiten des Zuführ- und Verpackungsweges (10) angeordnet sind.

4. Verpackungssystem nach Anspruch 3, wobei das Verschlusssystem (14) eine erste Seitenverschlussvorrichtung (31.2) und eine zweite Seitenverschlussvorrichtung (31.2), umfasst, die einander gegenüberliegend an den Seiten des Zuführ- und Verpackungsweges (10) angeordnet ist und dazu eingerichtet sind, ein erstes Paar von Laschen (L1) des Einwickelblatts (F) auf einer ersten Seitenoberfläche der Packung (C) von Tissuepapier-Produkten (R) und ein zweites Paar von Laschen (L2) des Einwickelblatts (F) auf einer zweiten Seitenoberfläche der Packung (C) von Tissuepapier-Produkten (R) zu verbinden; und wobei die erste Kamera (51.1) und die zweite Kamera (51.2) so angeordnet sind, dass sie Bilder von der ersten Seitenoberfläche und der zweiten Seitenoberfläche der Packung (C) von Tissuepapier-Produkten (R) aufnehmen, nachdem das erste Paar von Laschen (L1) des Einwickelblatts (F) und das zweite Paar von Laschen (L2) des Einwickelblatts (F) gefaltet und verbunden worden sind.

5. Verpackungssystem nach Anspruch 3 oder 4, wobei das erste Sichtsystem außerdem mindestens eines der folgenden Elemente umfasst:
eine dritte Videokamera (51.3), die so angeordnet ist, dass sie die Packung (C) von oben erfasst;
eine vierte Videokamera (51.4), die so angeordnet ist, dass sie die Packung (C) von unten erfasst.

6. Verpackungssystem nach Anspruch 5, wobei die vierte Kamera (51.4) eine Zeilenkamera ist, die an einer Öffnung entlang einer Liege- und Zuführfläche (7) angeordnet ist, auf der die Packungen (C) von Tissuepapier-Produkten (R) liegen und sich bewegen.

7. Verpackungssystem nach Anspruch 4, 5 oder 6, wobei die erste Seitenverschlussvorrichtung (31.1) und die zweite Seitenverschlussvorrichtung (31.2) Heizelemente (39.1, 39.2) umfassen, die dazu eingerichtet sind, das Einwickelblatt (F) zu verschließen, vorzugsweise durch Schweißen, und wobei ein Temperatursensor (52.1, 52.2) zumindest einer der ersten Seitenverschlussvorrichtung (31.1) und der zweiten Seitenverschlussvorrichtung (31.2) und vorzugsweise sowohl mit der ersten Seitenverschlussvorrichtung (31.1) und der zweiten Seitenverschlussvorrichtung (31.2) zugeordnet ist, wobei der Temperatursensor (52.1, 52.2) der jeweiligen Seitenverschlussvorrichtung (31.1, 31.2) entlang des Zuführ- und Verpackungsweges (10) nachgelagert angeordnet ist, wobei der Temperatursensor (52.1, 52.2) eingerichtet ist, die Temperatur des Einwickelblatts (F) in einem Bereich zu erfassen, in dem die jeweilige Seitenverschlussvorrichtung gewirkt hat.

8. Verpackungssystem nach mindestens Anspruch 5, wobei die Verpackungsmaschine (1) eine Querverschlussvorrichtung (45) aufweist, die dazu eingerichtet ist, zwei überlappende Ränder (B1, B2) des Einwickelblatts (F) zu verbinden, die im Wesentlichen orthogonal zu den Seitenoberflächen der Packung (C) von Tissuepapier-Produkten (R) sind, und wobei die vierte Kamera (51. 4) der Querverschlussvorrichtung (45) entlang des Zuführ- und Verpackungsweges (10) nachgelagert angeordnet ist, um die Oberfläche der Packung (C) von Tissuepapier-Produkten (R) zu erfassen, an der die beiden überlappten, verbundenen Ränder des Einwickelblatts angeordnet sind.

9. Verpackungssystem nach Anspruch 8, wobei die Seitenverschlussvorrichtung (45) unterhalb des Zuführ- und Verpackungsweges (10) angeordnet ist.

10. Verpackungssystem nach Anspruch 8 oder 9, wobei die vierte Kamera (51.4) eine Zeilenkamera ist, die in Übereinstimmung mit der Liege- und Zuführfläche (7) angeordnet ist, auf der die Packungen (C) von Tissuepapier-Produkten (R) liegen und sich bewegen, wobei sich die Liege- und Zuführfläche (7) entlang des Zuführ- und Verpackungsweges (10) erstreckt.

11. Verpackungssystem nach Anspruch 8 oder 9 oder 10, bei dem die Querverschlussvorrichtung (45) eine Schweißvorrichtung ist und bei dem der Querverschlussvorrichtung (45) ein Temperatursensor (54) zugeordnet ist, der so beschaffen ist, dass er die Temperatur des Einwickelblatts (F) in dem Querverschlussbereich der Querschließvorrichtung (45) entlang des Zuführ- und Verpackungsweges (10) nachgelagert in einem Bereich erfasst, in dem die Querverschlussvorrichtung (45) gewirkt hat.

12. Verpackungssystem nach einem oder mehreren der vorhergehenden Ansprüche, wobei die Positioniervorrichtung (12) mit einer Abwickelvorrichtung (28) kombiniert ist, die dazu eingerichtet ist, eine Rolle (B) aus Bahnmaterial (N) zu tragen, von der einzelne Einwickelblätter (F) durch ein Schneidelement (26A) geschnitten werden; und wobei ein zweites Sichtsystem mit mindestens einer von der Positioniervorrichtung (12) und der Abwickelvorrichtung (28) kombiniert ist, um Bilder des Bahnmaterials (N) zu erfassen, bevor oder nachdem die Einwickelblätter (F) geschnitten wurden und bevor das Einwickelblatt (F) um die Gruppe von Tissuepapier-Produkten (R) gewickelt wird.

13. Verpackungssystem nach Anspruch 12, wobei das zweite Sichtsystem mindestens eine fünfte Videokamera (51.5) umfasst, die entweder entlang eines Abwickelwegs des Bahnmaterials (N) von der Abwickelvorrichtung (28) bis zur Positioniervorrichtung (12) oder in derselben Positioniervorrichtung (12) angeordnet ist.

14. Verpackungssystem nach Anspruch 12 oder 13, wobei die Verpackungsmaschine (1) eine Perforiervorrichtung (26B) umfasst, die dazu eingerichtet ist, das von der Rolle (B) abgewickelte Bahnmaterial (N) zu perforieren, um eine Vorbruchlinie auf dem Einwickelblatt (F) zu definieren.

15. Verpackungssystem nach einem oder mehreren der vorhergehenden Ansprüche, wobei die zentrale Steuereinheit (53) eine Schnittstelle zu einer Datenbank (63) aufweist, die eingerichtet ist, Referenzbilder der Packungen (C) von Tissuepapier-Produkten (R) zu enthalten; und wobei die zentrale Steuereinheit (53) so programmiert ist, dass sie von mindestens einer Kamera erfasste Bilder mit in der Datenbank (63) gespeicherten Bildern vergleicht.

16. Verpackungssystem nach Anspruch 15, wobei die zentrale Steuereinheit (53) so konfiguriert ist, dass sie eine oder mehrere der folgenden Daten empfängt:
- eine Produktionsgeschwindigkeit der Maschine;
- eine Temperatur der Querverschlussvorrichtung;
- eine Temperatur der ersten Seitenverschlussvorrichtung;
- eine Temperatur der zweiten Seitenverschlussvorrichtung ;
- eine Spannung des Bahnmaterials;
- eine Geschwindigkeit des Förderers;
- eine Information über den Betrieb des Bahnmaterial-Schneidelements ;
- eine Information über den Betrieb der Perforiervorrichtung für das Bahnmaterial;
- eine Information über die Festigkeit der Tissuepapier-Produkte;
- eine Information über eine geometrische Anordnung der Tissuepapier-Produkte, die die Gruppe von Tissuepapier-Produkten bilden;
- eine Information über mindestens ein Bild, das auf die Einwickelblatt gedruckt ist.

17. Verpackungssystem nach Anspruch 15 oder 16, wobei die zentrale Steuereinheit (53) konfiguriert ist:
einen Defekt in mindestens einem, von mindestens einer Kamera erfassten Bild der Packung (C) zu erkennen, basierend auf dem Vergleich zwischen dem erfassten Bild und einem in der Datenbank (63) gespeicherten Referenzbild; und
falls ein Defekt in der Packung (C) erkannt wird, mindestens einen Betriebsparameter der Verpackungsmaschine (1) zu modifizieren; oder einem Bediener zu signalisieren, dass es angebracht ist, mindestens einen Betriebsparameter der Verpackungsmaschine (1) zu modifizieren.

18. Verpackungssystem nach einem oder mehreren der Ansprüche 15 bis 17, wobei die Referenzbilder der Packungen (C) von Tissuepapier-Produkten entweder im Voraus in der Datenbank gespeichert, bei Produktionsbeginn erfasst oder während der Produktion erfasst werden.

19. Verfahren zur Herstellung von Packungen (C) von Tissuepapier-Produkten (R) durch das Verpackungssystem nach einem oder mehreren der vorhergehenden Ansprüche, umfassend die folgenden Schritte:
Erfassen von Bildern der Packungen oder des Einwickelblatts durch mindestens ein Sichtsystem, wobei das mindestens eine Sichtsystem mindestens eine Videokamera umfasst;
Erkennen eines Fehlers in der Packung oder in dem Einwickelblatt durch die Bilder, die von der mindestens einen Videokamera des mindestens einen Sichtsystems erfasst wurden;
Vorschlagen einer Korrekturmaßnahme oder Durchführen einer Korrekturmaßnahme an mindestens einem Betriebsparameter, um den erkannten Fehler zu korrigieren.

20. Verfahren nach Anspruch 19, wobei der Schritt des Erkennens eines Defekts in der Packung (C) oder in dem Einwickelblatt (F) den Schritt des Vergleichens eines von dem Sichtsystem erfassten Bildes mit in einer Datenbank gespeicherten Referenzbildern umfasst.

## Revendications

1. Un système pour emballer des produits en produit absorbant (R) dans une feuille d'emballage (F), dans lequel ce système d'emballage inclut :
- une machine d'emballage (1) comprenant :
un dispositif de positionnement (12), apte à positionner une feuille d'emballage (F) le long d'un chemin d'introduction (4), grâce auquel des groupes (G) de produits (R) à emballer sont déplacés vers un chemin d'avancement et d'emballage (10) ;
un dispositif d'introduction apte à introduire les groupes (G) de produits en papier absorbant (R) sur le chemin d'introduction (4) vers le chemin d'avancement et d'emballage (10) ;
un convoyeur (13) apte à déplacer les produits en papier absorbant (R) le long du chemin d'avancement et d'emballage (10) à travers une unité de pliage (9) agencée le long du chemin d'avancement et d'emballage ; l'unité de pliage (9) étant apte à envelopper le groupe de produits en papier absorbant (R) à l'aide de la feuille d'emballage (F) ;
un système de fermeture (14) apte à fermer la feuille d'emballage (F) autour des produits en papier absorbant (R) et à former un paquet (C) de produits en papier absorbant, le système de fermeture étant agencé le long du chemin d'avancement et d'emballage (10) en aval de l'unité de pliage (9) ;
- un premier système de visionnage pour acquérir des images d'au moins une partie du paquet (C) de produits en papier absorbant (R) enveloppé dans la feuille d'emballage (F), le premier système de visionnage comprenant au moins une caméra,
- une unité centrale de commande (53) connectée aux caméras (51.1, 51.2, 51.3, 51.4, 51.5) de chaque système de visionnage et programmée pour détecter au moins un défaut dans le paquet sur la base des images prises par chaque système de visionnage, et
➢ pour intervenir automatiquement sur un paramètre de fonctionnement de la machine d'emballage (1) pour ajuster le fonctionnement de celle-ci de manière à réduire ou éliminer le défaut ; ou
➢ pour signaler, à l'aide d'une interface homme-machine, toute anomalie, en suggérant une action corrective.

2. Le système d'emballage selon la revendication 1, dans lequel le premier système de visionnage est agencé le long du chemin d'avancement et d'emballage (10) en aval du système de fermeture (14).

3. Le système d'emballage selon la revendication 2, dans lequel le premier système de visionnage comprend au moins une première caméra (51.1) et une deuxième caméra (51.2), agencées l'une en face de l'autre sur les côtés du chemin d'avancement et d'emballage (10).

4. Le système d'emballage selon la revendication 3, dans lequel le système de fermeture (14) comprend un premier dispositif de fermeture latéral (31.2) et un deuxième dispositif de fermeture latéral (31.2) agencés l'un en face de l'autre sur les côtés du chemin d'avancement et d'emballage (10), et aptes à rassembler une première paire de rabats (L1) de la feuille d'emballage (F) sur une première surface latérale du paquet (C) de produits en papier absorbant (R) et une deuxième paire de rabats (L2) de la feuille d'emballage (F) sur une deuxième surface latérale du paquet (C) de produits en papier absorbant (R) ; et dans lequel la première caméra (51.1) et la deuxième caméra (51.2) sont agencés de façon à prendre des images de la première surface latérale et de la deuxième surface latérale du paquet (C) de produits en papier absorbant (R) après que la première paire de rabats (L1) de la feuille d'emballage (F) et la deuxième paire de rabats (L2) de la feuille d'emballage (F) ont été pliés et rassemblés.

5. Le système d'emballage selon la revendication 3 ou 4, dans lequel le premier système de visionnage comprend en outre au moins l'un des éléments suivants :
une troisième caméra (51.3) agencée de façon à cadrer le paquet (C) depuis le dessus ;
une quatrième caméra (51.4) agencée de façon à cadre le paquet (C) depuis le bas.

6. Le système d'emballage de la revendication 5, dans lequel la quatrième caméra (51.4) est une caméra de balayage en ligne, agencée à une ouverte le long d'une surface d'appui et d'avancement (7) sur laquelle les paquets (C) de produits en papier absorbant (R) reposent et se déplacent.

7. Le système d'emballage selon la revendication 4, 5 ou 6, dans lequel le premier dispositif de fermeture latéral (31.1) et le deuxième dispositif de fermeture latérale (31.2) comprennent des organes de chauffage (39.1, 39.2) aptes à fermer la feuille d'emballage (F) de préférence par soudure, et dans lequel un capteur de température (52.1, 52.2) est associé à au moins l'un des premier (31.1) et deuxième (31.2) dispositifs de fermeture latéraux et de préférence à la fois au premier dispositif de fermeture latéral (31.1) et au deuxième dispositif de fermeture latéral (31.2), le capteur de température (52.1, 52.2) étant agencé en aval du dispositif de fermeture latéral respectif (31.1, 31.2) le long du chemin d'avancement et d'emballage (10), le capteur de température (52.1, 52.2) étant apte à mesurer la température de la feuille d'emballage (F) dans une zone où le dispositif de fermeture latéral respectif a opéré.

8. Le système d'emballage selon la revendication 5 au moins, dans lequel la machine d'emballage (1) comprend un dispositif de fermeture transversal (45), apte à rassembler deux bords superposés (B1, B2) de la feuille d'emballage (F) qui sont sensiblement perpendiculaires aux surfaces latérales du paquet (C) de produits en papier absorbant (R), et dans lequel une quatrième caméra (51.4) est agencée en aval du dispositif de fermeture transversal (45) le long du chemin d'avancement et d'emballage (10), de façon à cadrer la surface du paquet (C) de produits en papier absorbant (R) sur laquelle les deux bords rassemblés superposés de la feuille d'emballage sont agencés.

9. Le système d'emballage selon la revendication 8, dans lequel le dispositif de fermeture latéral (45) est agencé sous le chemin d'avancement et d'emballage (10).

10. Le système d'emballage selon la revendication 8 ou 9, dans lequel la quatrième caméra (51.4) est une caméra de balayage en ligne agencée en correspondance avec la surface d'appui et d'avancement (7) sur laquelle les paquets (C) de produits en papier absorbant (R) reposent et avancent, la surface d'appui et d'avancement (7) s'étendant le long du chemin d'avancement et d'emballage (10).

11. Le système d'emballage selon la revendication 8 ou 9 ou 10, dans lequel le dispositif de fermeture transversal (45) est un dispositif de soudage et dans lequel un capteur de température (54) est associé avec le dispositif de fermeture transversal (45), le capteur étant apte à mesurer la température de la feuille d'emballage (F) dans la zone de fermeture transversale, en aval du dispositif de fermeture transversal (45) le long du chemin d'avancement et d'emballage (10), dans une zone où le dispositif de fermeture transversal (45) a opéré.

12. Le système d'emballage selon l'une ou plusieurs des revendications précédentes, dans lequel le dispositif de positionnement (12) est combiné avec un dérouleur (28) apte à supporter un rouleau (B) de matériau en bande (N), à partir duquel des feuilles d'emballage individuelles (F) sont coupées par un organe de coupe (26A) ; et dans lequel un deuxième système de visionnage est combiné avec au moins l'un du dispositif de positionnement (12) et du dérouleur (28), pour acquérir des images du matériau en bande (N) avant ou après que les feuilles d'emballage (F) ont été coupées avant que le groupe de produits en papier absorbant (R) ne soit enveloppé par la feuille d'emballage (F).

13. Le système d'emballage selon la revendication 12, dans lequel le deuxième système de visionnage comprend au moins une cinquième caméra (51.5) agencée soit le long d'un chemin de déroulement du matériau en bande (N) du dérouleur (28) vers le dispositif de positionnement (12) ou dans ce même dispositif de positionnement (12).

14. Le système d'emballage selon la revendication 12 ou 13, dans lequel la machine d'emballage (1) comprend un dispositif de perforation (26B) apte à perforer le matériau en bande (N) déroulé à partir du rouleau (B) pour créer une ligne de pré-rupture sur la feuille d'emballage (F).

15. Le système d'emballage selon l'une ou plusieurs des revendications précédentes, dans lequel l'unité centrale de commande (53) réalise l'interface avec une base de données (63) apte à contenir des images de référence des paquets (C) de produits en papier absorbant (R) ; et dans lequel l'unité centrale de commande (53) est programmée pour comparer des images acquises par la ou les caméras avec des images stockées dans la base de données (63).

16. Le système d'emballage selon la revendication 15, dans lequel l'unité centrale de commande (53) est configurée pour recevoir l'une ou plusieurs des données suivantes :
- une vitesse de production de la machine ;
- une température du dispositif de fermeture transversal ;
- une température du premier dispositif de fermeture latéral ;
- une température du deuxième dispositif de fermeture latéral ;
- une tension du matériau en bande ;
- une vitesse du convoyeur ;
- une information sur le fonctionnement de l'organe de coupe du matériau en bande ;
- une information sur le fonctionnement du dispositif de perforation du matériau en bande ;
- une information sur la fermeté des produits en papier absorbant ;
- une information sur l'agencement géométrique des produits en papier absorbant formant le groupe de produits en papier absorbant ;
- une information sur au moins une image imprimée sur la feuille d'emballage.

17. Le système d'emballage selon la revendication 15 ou 16, dans lequel l'unité centrale de commande (53) est configurée :
pour détecter un défaut dans au moins une image du paquet (C) acquise par au moins une caméra sur la base de la comparaison de l'image acquise à une image de référence stockée dans la base de données (63) ; et
en cas de détection d'un défaut dans le paquet (C), pour modifier au moins un paramètre de fonctionnement de la machine d'emballage (1) ; ou pour signaler à un opérateur qu'il serait approprié de modifier au moins un paramètre de fonctionnement de la machine d'emballage (1).

18. Système d'emballage selon l'une ou plusieurs des revendications 15 à 17, dans lequel les images de référence des paquets (C) de produits en papier absorbant sont soit stockées à l'avance dans la base de données ou acquises lorsque la production démarre, ou acquises durant la production.

19. Un procédé de production de paquets (C) de produits en papier absorbant (R) à l'aide d'un système d'emballage selon l'une ou plusieurs des revendications précédentes, comprenant les étapes suivantes :
l'acquisition, à l'aide d'au moins un système de visionnage, d'images des paquets ou de la feuille d'emballage, ce ou ces systèmes de visionnage comprenant au moins une caméra,
la détection d'un défaut dans le paquet ou dans la feuille d'emballage à l'aide desdites images acquises par la ou les caméra(s) du ou des système(s) de visionnage ;
la suggestion d'une action de correction ou la réalisation d'une action de correction sur ledit ou lesdits paramètre(s) de fonctionnement pour corriger le défaut détecté.

20. Le procédé selon la revendication 19, dans lequel l'étape de détection d'un défaut dans le paquet (C) ou dans la feuille d'emballage (F) comprend l'étape de comparaison d'une image acquise par le système de visionnage à des images de référence stockées dans une base de données.
